# EUROPEAN PATENT SPECIFICATION

(11) **EP 1 348 735 B1**
(45) Date of publication and mention of the grant of the patent: **02.07.2008**
(21) Application number: 03006190.7
(22) Date of filing: 19.03.2003
(51) Int. Cl.: C08L 53/00

(54) **Block polymer composition comprising a methacrylic resin**
Blockpolymerzusammensetzung enthaltend ein Methacrylharz
Composition de polymère séquencé contenant une résine méthacrylique

(30) Priority: 27.03.2002 JP 2002089009
(43) Date of publication of application: 01.10.2003
(73) Proprietor: KURARAY CO., LTD., Kurashiki-shi, Okayama 710-8622 (JP)
(72) Inventor: Hamada, Kenichi, Tukuba-city, Ibaraki-pref. (JP); Kurihara, Toyoaki, Tukuba-city, Ibaraki-pref. (JP); Morishita, Yoshihiro, Tukuba-city, Ibaraki-pref. (JP); Kato, Masaji, Tukuba-city, Ibaraki-pref. (JP); Sasaki, Shigeru, Kurashiki-city, Okayama 710-8622 (JP)
(74) Representative: Müller-Boré & Partner Patentanwälte

(56) References cited:
- WO-A-02/081561
- WO-A-02/092696
- JP-A- 2002 194 167

## Description

The present invention relates to an acrylic polymer composition, more specifically to an acrylic polymer composition having good flexibility and capable of providing a molded or formed product well balanced between the flexibility and mechanical properties.

It is known that a triblock copolymer (which may hereinafter be described as "(meth)acrylic triblock copolymer") having a methacrylate ester polymer block bonded to both ends of an acrylate ester polymer block is useful as a thermoplastic elastomer (refer to Japanese Patent Publication No. 25859/1995 which corresponds to US Patent No. 5,264,527). It is however known that the (meth)acrylic triblock copolymer has not sufficient mechanical properties, for example, tensile strength, compared with a styrene-conjugated diene-styrene triblock copolymer (Polymer 42, 3503-3514(2001)).

The (meth)acrylic block copolymer has thermoplasticity. However, when it is molded or formed by heating under molten state to impart it a desired shape and then cooling to solidify it, it happens to exhibit, during a procedure from melting to cooling, so-called "anisotropy", that is, difference in mechanical characteristics of a molded or formed product depending on the direction of a stress.

In order to overcome the above-described problems of the (meth)acrylic block copolymer and provide a well-balanced resin composition, it is the common practice to alloy or blend it with another resin. When the (meth)acrylic block copolymer is alloyed or blended with another resin, however, the resulting alloy or composition sometimes lose its original properties which the (meth)acrylic block copolymer possesses, for example, good flexibility, transparency and weather resistance (refer to Japanese Patent Application Laid-Open No. 168271/1998).

JP-A-2000-169665 describes a thermoplastic resin composition which is prepared by including 99.5 to 30 wt.-% methacrylic resin and 0.5 to 70 wt.-% block copolymer consisting of (i) a methacrylic polymer block, (ii) an acrylic polymer block and (iii) an isobutylene-based polymer block.

WO-A-02/081561 describes a thermoplastic resin composition which is obtained by compounding a thermoplastic resin or elastomer with a block copolymer having at least one methacrylic ester polymer block and at least one acrylic ester polymer block.

WO-A-02/092696 describes a thermoplastic resin composition which comprises a thermoplastic resin and a block copolymer comprising a methacrylic polymer block and an acrylic polymer block.

A first object of the present invention is therefore to provide, a polymer composition which does not lose excellent weather resistance and flexibility derived from acrylic thermoplastic elastomer and moreover, is excellent in balance between these properties and mechanical strength. A second object of the present invention is, in addition to the above-described first object, to provide a polymer composition which does not lose transparency and is well balanced between the transparency and mechanical strength. A third object of the present invention is to provide a molded or formed product made of the first or second polymer composition.

With a view to overcoming the above-described problems, the present inventors have proceeded with an extensive investigation. As a result, it has been found that a polymer composition and a molded or formed product thereof capable of satisfying the above-described objects are available by mixing a methacrylic resin (a) and, for example, a specific triblock copolymer (b) having a methacrylate ester polymer block bonded to both ends of an acrylate ester polymer block, leading to the completion of the present invention.

In a first aspect of the present invention, there is thus provided an acrylic polymer composition comprising:
(i) (a) a methacrylic resin having at least 40 wt% of methacrylate ester units, and (b) a block copolymer having, in the molecule thereof, at least one structure in which (b2) polymer blocks each composed mainly of methacrylate ester units bonded to both ends of (b1) a polymer block composed mainly of acrylate ester units, and having a polymer block (b2) content of 10 to 50 wt%;
(ii) the weight ratio (a/b) of the methacrylic resin (a) and the block copolymer (b) falling within a range of 3/97 to 40/60; and
(iii) the total amount of the methacrylic resin (a) component and the methacrylate ester polymer block (b2) component being 10 to 60 wt% based on the total amount of the resin components,
wherein at least 5 wt% of the methacrylic resin (a) is a component having a molecular weight not larger than 3 times as much as the number-average molecular weight of a block (b2max) having the largest molecular weight among the methacrylate ester polymer blocks (b2) constituting the block copolymer (b).

In a second aspect of the present invention, there is also provided a molded or formed product made of an acrylic polymer composition as described in the first aspect of the present invention.

The methacrylic resin (a) which is a first component in the present invention may be a homopolymer of a methacrylate ester or a copolymer composed mainly of methacrylate ester units. More specifically, at least 40 wt% of the monomer constituting the resin must be a methacrylate ester, with at least 60 wt% being preferred. When the methacrylate ester component is less than 40 wt%, affinity with the block copolymer is insufficient, leading to inferior mechanical characteristics of the resin composition.

Examples of the methacrylate ester monomer which is a main component constituting the methacrylic resin (a) include methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, and 2-methoxyethyl methacrylate. At least one of the above-exemplified methacrylate esters can be employed. Of these methacrylate esters, the alkyl methacrylate such as methyl methacrylate, ethyl methacrylate, isopropyl methacrylate, n-butyl methacrylate, tert-butyl methacrylate, cyclohexyl methacrylate and isobornyl methacrylate are preferred from the viewpoints of mechanical characteristics and heat resistance of the polymer composition of the present invention, of which the methyl methacrylate is more preferred. Monomers such as glycidyl methacrylate and allyl methacrylate may be used as a constituent (a minor component) insofar as they do not impair the intended effect of the present invention.

Although no particular limitation is imposed on another monomer copolymerizable with the above-described methacrylate ester constituting the methacrylic resin (a), examples include acrylate esters such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate and allyl acrylate; unsaturated carboxylic acids such as methacrylic acid, acrylic acid and maleic anhydride; olefins such as ethylene, propylene, 1-butene, isobutylene and 1-octene; conjugated diene compounds such as 1,3-butadiene, isoprene and myrcene; aromatic vinyl compounds such as styrene, α-methylstyrene, p-methylstyrene and m-methylstyrene; and vinyl acetate, vinylpyridine, acrylonitrile, methacrylonitrile, vinyl ketone, vinyl chloride, vinylidene chloride, vinylidene fluoride, acrylamide and methacrylamide. At least one of these monomers may be used.

When the methacrylic resin (a) is a copolymer, there is no particular limitation in the form of copolymerization. Any one of random copolymerization, block copolymerization, graft copolymerization, and alternating copolymerization is usually adopted. The stereoregularity of the methacrylic resin (a) to be used in the present invention is not particularly limited and the resin having an isotactic, heterotactic or syndiotactic structure is usable.

Although there is no particular limitation imposed on the number average molecular weight of the methacrylic resin (a), it is preferably 5,000 to 2,000,000, more preferably 10,000 to 1,000,000.

The above-exemplified methacrylic resins (a) can be used either singly or as a mixture of at least two methacrylic resins different in molecular weight.

The block copolymer (b) which is a second component of the present invention has, in the molecule thereof, at least one structure wherein polymer blocks (b2) composed mainly of methacrylate ester units have been bonded to both ends of a polymer block (b1) composed mainly of acrylate ester units, that is, a structure of "methacrylate ester polymer block (b2)"-"acrylate ester polymer block (b1)"-"methacrylate ester polymer block (b2)" (in the structure, "-" means a chemical bond). Although no particular limitation is imposed on the content of the acrylate ester units or methacrylate ester units in the above-described polymer block (b1) or the polymer blocks (b2) insofar as it is a sufficient amount for them to work as the main component, each content within a range of from 60 to 100 wt% is preferred, with a range of from 80 to 100 wt% being more preferred.

In the above-described block copolymer (b), the polymer blocks (b2) composed mainly of methacrylate ester units are each a polymer block composed mainly of methacrylate ester units. Examples of the methacrylate ester for constituting the polymer block include methyl methacrylate, ethyl methacrylate, n-propyl methacrylate, isopropyl methacrylate, n-butyl methacrylate, isobutyl methacrylate sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate and 2-methoxyethyl methacrylate. At least one of these methacrylate esters may be used. Among the above-exemplified methacrylate esters, use of the alkyl methacrylate such as methyl methacrylate, ethyl methacrylate, isopropyl methacrylate, n-butyl methacrylate, tert-butyl methacrylate, cyclohexyl methacrylate or isobornyl methacrylate is preferred from the viewpoint of improving the mechanical characteristics and heat resistance of the polymer composition of the present invention, with use of methyl methacrylate being more preferred.

It is possible to use another monomer such as glycidyl methacrylate, allyl methacrylate, the above-described acrylate ester, methacrylic acid, acrylic acid, aromatic vinyl compound, acrylonitrile, methacrylonitrile, and olefin as a copolymer component (minor component) insofar as they do not impair the intended effect of the present invention.

In the block copolymer (b), the polymer block (b1) composed mainly of acrylate ester units is a polymer block mainly constituted by acrylate ester units. Examples of the acrylate ester constituting the polymer block include methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate and2-methoxyethyl acrylate. At least one of the above-exemplified acrylate esters may be used. Among these acrylate esters, use of the alkyl acrylate such as methyl acrylate, ethyl acrylate, isopropyl acrylate, n-butyl acrylate, 2-ethylhexyl acrylate, dodecyl acrylate, phenoxyethyl acrylate or 2-methoxyethyl acrylate is preferred from the viewpoint of improving the flexibility of the polymer composition of the present invention, with the use of n-butyl acrylate or 2-ethylhexyl acrylate being more preferred.

It is also possible to use another monomer such as glycidyl acrylate, allyl acrylate, the above-described methacrylate ester, methacrylic acid, acrylic acid, aromatic vinyl compound, acrylonitrile, methacrylonitrile or olefin as a copolymer component (minor component) insofar as it does not impair the intended effect of the present invention. The block copolymer (b) has, in the molecule thereof, at least one b2-b1-b2 structure having one polymer block (b1) composed mainly of acrylate ester units and two polymer blocks (b2) composed mainly of methacrylate ester units. Use of, as the block copolymer (b), a triblock copolymer having a b2-b1-b2 structure is preferred. The acrylic polymer composition of the present invention may have, as a block other than the above-described blocks, a polymer block (c) derived from a monomer other than the acrylate ester monomer and methacrylate ester monomer insofar as it does not impair the intended effect of the present invention. Although no particular limitation is imposed on the bonding manner of the polymer block (c) to the polymer block (b1) composed mainly of acrylate ester units or the polymer blocks (b2) composed mainly of methacrylate ester units examples include a structure of [methacrylate ester polymer block (b2)] - ([acrylate ester polymer block (b1)] - [methacrylate ester polymer block (b2)])ₙ - [polymer block (c)], and a structure of [polymer block (c)] - [methacrylate ester polymer block (b2)] - ([acrylate ester polymer block (b1)] - [methacrylate ester polymer block (b2)])ₙ - [polymer block (c)] wherein n stands for an integer of 1 to 20. Examples of the monomer constituting such polymer block (c) include olefins such as ethylene, propylene, 1-butene, isobutylene and 1-octene; conjugated diene compounds such as 1,3-butadiene, isoprene and myrcene; aromatic vinyl compounds such as styrene, α-methylstyrene, p-methylstyrene and m-methylstyrene; and vinyl acetate, vinylpyridine, acrylonitrile, methacrylonitrile, vinyl ketone, vinyl chloride, vinylidene chloride, vinylidene fluoride, acrylamide, methacrylamide, ε-caprolactone and valerolactone.

No particular limitation is imposed on the form of the molecular chain of the block copolymer (b) and it may be any one of linear, branched or radial chain.

Although no particular limitation is imposed on the number average molecular weight of the block copolymer (b), usually, it preferably falls within a range of 10,000 to 1,000,000, more preferably within a range of 15,000 to 700,000. The number average molecular weight of the polymer block composed mainly of acrylate ester units is not always limited, but usually, it preferably falls within a range of 8,000 to 900,000, more preferably within a range of 12,000 to 600,000. The number average molecular weight of the polymer block composed mainly of methacrylate ester units is not always limited, but usually, it preferably falls within a range of 1,000 to 450,000, more preferably within a range of 1,500 to 300,000.

The content, in the block copolymer (b), of the polymer block (b2) composed mainly of methacrylate ester units constituting the block copolymer (b) should be 10 to 50 wt%, with 15 to 40 wt% being preferred. When the content of the polymer block (b2) composed mainly of methacrylate ester units is less than 10 wt%, the polymer composition of the present invention sometimes cannot be used as amolding or forming material because of stickiness. When the content of the methacrylate ester polymer block (b2) exceeds 50 wt%, on the other hand, the polymer composition of the present invention has only poor flexibility. The contents outside the above-described range are therefore not preferred.

The block copolymer (b) to be used in the present invention may have, in the molecular chain thereof or at the end of the molecular chain thereof, a functional group such as hydroxyl group, carboxyl group, acid anhydride or amino group as needed.
As a preparation process of the above-described block copolymer (b), processes in accordance with the known technique can be adopted without no particular limitation. For example, living polymerization of monomers constituting each block is ordinarily employed as a process for obtaining the block copolymer (b). Examples of the technique of such living polymerization include a process of anionic polymerization in the presence of a salt of a mineral acid such as alkali metal or alkaline earth metal while using an organic alkalimetal compound as a polymerization initiator (refer to Japanese Patent Publication No. 25859/1995 corresponding to US Patent No. 5,264,527), a process of anionic polymerization in the presence of an organoaluminum compound while using an organic alkalimetal compound as a polymerization initiator (refer to Japanese Patent Application Laid-Open No. 335432/1999 corresponding to US Patent No. 6,329,480), a polymerization process using an organic rare-earth metal complex as a polymerization initiator (refer to Japanese Patent Application Laid-Open No. 93060/1994) and a radical polymerization process in the presence of a copper compound while using an α-halogenated ester compound as an initiator (Macromolecule Chemical Physics, 201, 1108-1114(2000)). It is also possible to prepare a mixture containing the block copolymer (b) of the present invention by polymerizing monomers constituting each block by using a polyvalent radical polymerization initiator or polyvalent radical chain transfer agent.

Of the above-described processes, the anionic polymerization process in the presence of an organoaluminum compound while using an organic alkalimetal compound as a polymerization initiator is recommended, because it permits preparation of the block copolymer in high purity, facilitates control of the molecular weight or composition ratio and is economical.

In the acrylic polymer composition of the present invention, the methacrylic resin (a) and block copolymer (b) are incorporated at a methacrylic resin (a)/ block copolymer (b) weight ratio (a/b) falling within a range of from 3/97 to 40/60.

When the ratio of the methacrylic resin (a) is below the above-described range (in other words, the ratio of the block copolymer (b) exceeds the above-described range), the resulting composition has reduced mechanical strength. When the ratio of the methacrylic resin (a) exceeds the above-described range (in other words, the ratio of the block copolymer (b) is below the above-described range), on the other hand, the resulting polymer composition has deteriorated flexibility. Ratios outside the above-described range are therefore not preferred. When the mechanical strength and flexibility of the molded or formed product available from the polymer composition are totally considered, the methacrylic resin (a)/the block copolymer (b) weight ratio preferably falls within a range of 10/90 to 40/60.

In the acrylic polymer composition of the present invention, the total amount of the methacrylic resin (a) component and the polymer block (b2) component composed mainly of methacrylate ester units is required to be 10 to 60 wt%, with 20 to 55 wt% being preferred and 25 to 50 wt% being more preferred, each based on the total amount of the resin components of the polymer composition. When the total amount of the methacrylic resin (a) component and the polymer block (b2) component composed mainly of methacrylate ester units exceeds 60 wt%, the flexibility of the molded or formed product obtained from the polymer composition lowers. When the total amount of the methacrylic resin (a) component and the polymer block (b2) component composed mainly of methacrylate ester units is below 10 wt%, on the other hand, the stickiness of the molded or formed product obtained from the polymer composition sometimes becomes excessive. The total amounts outside the above-described range are therefore not preferred.

For improving dispersibility of each component constituting the acrylic polymer composition of the present invention or transparency of the composition itself, at least 5 wt%, preferably 8 to 60 wt%, more preferably 10 to 50 wt% of the component constituting the methacrylic resin (a) is a component (low molecular weight component) having a molecular weight not larger than 3 times as much as the number-average molecular weight of a block (b2max) having the largest molecular weight among the polymer blocks (b2) which are composed mainly of methacrylate ester units and constitute the block copolymer (b). The reason is not completely apparent, but when such a condition is selected, the low molecular weight component in the methacrylic resin (a) works as a compatibilizing agent between the methacrylic resin (a) and block copolymer (b), leading to the formation of a structure in which the methacrylic resin (a) is finely dispersed in the matrix of the block copolymer (b). This is presumed to bring about good transparency. The acrylic polymer composition of the present invention may contain another polymer as needed, in addition to the above-described methacrylic resin (a) component and the block copolymer (b) component within an extent not damaging the effect of the present invention. Specific examples of the another polymer include olefin resins such as polyethylene, polypropylene, polybutene-1, poly-4-methylpentene-1, and polynorbornene; ethylene ionomers; styrene resins such as polystyrene, styrene-maleic anhydride copolymer, high-impact polystyrene, AS resin, ABS resin, AES resin, AAS resin, ACS resin and MBS resin; methyl methacrylate-styrene copolymer; polyester resins such as polyethylene terephthalate and polybutylene terephthalate; polyamides such as nylon 6, nylon 66 and polyamide elastomer; and polycarbonate, polyvinyl chloride, polyvinylidene chloride, polyvinyl alcohol, ethylene-vinyl alcohol copolymer, polyacetal, polyvinylidene fluoride, polyurethane, modified polyphenylene ether, polyphenylene sulfide and silicone rubber modified resin. Of these polymers, AS resin and polyvinylidene fluoride are preferred from the viewpoint of compatibility with the block copolymer which is one constituent of the present invention.

When a binary block copolymer having a methacrylate ester polymer block and an acrylate ester polymer block is used as the methacrylic resin (a) in the polymer composition of the present invention, the resulting polymer composition available has excellent adhesion or tackiness.

In the thermoplastic polymer composition of the present invention, various additives such as rubber, softener, lubricant, heat stabilizer, antioxidant, light stabilizer, adhesive, tackifier, plasticizer, antistatic, foaming agent, coloring agent, dye, and flame retardant; and fillers such as inorganic filler and fiber reinforcement may be incorporated within an extent not impairing the effect of the present invention. Specific examples of the rubber which can be incorporated include acrylic rubber, silicone rubber, styrene TPE (thermoplastic elastomer) such as SEPS, SEBS, and SIS; and olefin rubber such as IR, EPR and, EPDM. Specific examples of the softener include paraffin oil and naphthene oil for improving fluidity upon molding or forming. Specific examples of the inorganic filler include calcium carbonate, talc, carbon black, titanium oxide, silica, clay, bariumsulfateandmagnesiumcarbonate, which are added for the purpose of improving heat resistance and/or weather resistance, or as an extender. Specific examples of the fiber reinforcement include inorganic fibers such as glass fibers and carbon fibers, and organic fibers. At least one of these additives or fillers may be added. Of these additives, addition of heat stabilizer and antioxidant is practically preferred to improve heat resistance and weather resistance further.

Although no particular limitation is imposed on the preparation process of the acrylic polymer composition of the present invention, it is recommended to adopt mixing while kneading under molten state in order to improve dispersibility of each component constituting the polymer composition or heighten the transparency of the polymer composition itself.

For example, the methacrylic resin (a) and block copolymer (b) are kneaded under molten state. If necessary, they may be mixed together with the above-described another polymer and additives, or after mixing the block copolymer (b) with the above-described another polymer and additives, the resulting mixture may be mixed with the methacrylic resin (a). The mixing can be conducted in a known mixer or kneader such as kneader-ruder, extruder, mixing roll or Banbury mixer. The temperature upon mixture or kneading may be controlled as needed, depending on the melting temperature of the methacrylic resin (a) or block copolymer (b) to be employed. Mixing at a temperature within a range of from 110 to 300°C is usually preferred. In such a manner, the polymer composition of the present invention is available in a desired form such as pellets and powders. The polymer composition in the form of pellets or powders is suited for use as a molding or forming material.

Since the acrylic polymer composition of the present invention has excellent melt fluidity, it can be molded or formed by a method or apparatus ordinarily employed for thermoplastic polymers. For example, it can be molded or formed by the method including heating under molten state such as injection molding, extrusion molding, compression molding, blow molding, calendering and vacuum forming. By this processing, available are molded or formed products of any shape such as shapes, pipes, sheets, films and fibrous products and laminates containing a layer made of the polymer composition. Such molded or formed products obtained from the acrylic polymer composition of the present invention have excellent flexibility, transparency, mechanical strength and weather resistance so that they can be used for various purposes, for example, food packaging materials such as food packaging sheet and cap liner; convenience goods; ski goods such as ski shoes; sports goods or toys such as golf ball cover and core material; stationary products such as desk mat; automobile interior or exterior materials such as bumper guard; materials for civil engineering and construction such as sheet for engineering public works, waterproof sheet, sealing material for window frame and sealing material for buildings; materials for household electric appliances such as corner bumper for cleaners and door sealing materials for refrigerators; materials for AV apparatuses; materials for OA equipment; materials for shoes or clothing such as shoe sole or top lift; textile materials; and materials for medical instrument.

The present invention will hereinafter be described by Examples.

In the synthesis examples which will be described below, compounds which were dried and purified in a conventional manner, followed by deaeration by nitrogen were employed. Transfer or supply of the compounds was carried out in a nitrogen gas atmosphere.

In the below-described Examples and Comparative Examples, the number average molecular weight of the methacrylic resin or block copolymer, the amount of a low molecular weight component in the methacrylic resin, and constitution ratio of each polymer block in the block copolymer were determined as described below.

### (1) Measurement of molecular weight:

The weight average molecular weight (Mw) and number average molecular weight (Mn) of the methacrylic resin or block copolymer were determined by gel permeation chromatography (which will hereinafter be abbreviated as "GPC") as a molecular weight in terms of polystyrene and based on them, the molecular weight distribution (Mw/Mn) was calculated.

### (2) Measurement of the amount of a low molecular component :

From the chromatogram available from the measurement results of GPC, an area ratio of the component having a number average molecular weight exceeding 3 times that of (b2max) to the component having a number average molecular weight not larger than 3 times that of (B2max) was calculated and based on it, the amount of the low molecular weight component (a2) in the methacrylic resin (a) was determined.

### (3) Constitution ratio of each polymer block in the block copolymer:

A constitution ratio of each polymer block in the block copolymer was determined by measuring ¹H-NMR (¹H-nuclear magnetic resonance).

The apparatuses and conditions employed for the above-described measurements are as follows:
GPC:
   Apparatus: GPC apparatus "HLC-8020", product of TOSOH Corp.
   Separation column: "TSKgel GMHXL", "G4000HXL" and "G5000HXL" of TOSOH Corp. were linked in series.
   Eluent: tetrahydrofuran
   Flow rate of eluent: 1.0 ml/min
   Column temperature: 40°C
   Detecting method: differential refractometer (RI)
¹H-NMR:
   Apparatus: "JNM-LA400" a nuclear magnetic resonance spectrometer of JEOL
   Deuterated solvent: deuterated chloroform

The mechanical strength, tensile elongation at break, transparency and hardness of the molded or formed product (test piece) obtained from the block copolymer or the polymer composition were measured or evaluated as described below.

### (4) Tensile strength, and elongation at break of the molded or formed product:

Apress sheet of 2 mm thick was prepared using the block copolymer or polymer composition shown below in Examples or Comparative Examples. Then the test piece was punched out by a JIS No. 3 punching blade and by using it, the tensile strength and elongation at break were measured in accordance with ISO37.

### (5) Transparency of the molded or formed product

The haze value of a test piece of 1 mm thick was measured in accordance with JIS K 7105 by using a direct-reading haze computer (product of Suga Test Instruments).

### (6) Flexibility (hardness) of the molded or formed product

The durometer hardness testing was conducted and hardness was measured in accordance with ISO48 by using a Type A hardness tester (product of KOBUNSHI KEIKI CO., LTD.).

### Referential Example 1 (synthesis of the block copolymer (b) in Table 1)

A 1-liter three-necked flask was equipped with a three-way stop cock, followed by deaeration inside. After purging with nitrogen, 291 g of toluene, 29 g of 1,2-dimethoxyethane, and 15.2 g of a toluene solution containing 10 mmol of isobutylbis(2,6-di-t-butyl-4-methylphenoxy)aluminum was added at room temperature, followed by further addition of 1.0 mmol of sec-butyl lithium. After 12.0 g of methyl methacrylate was added to the resulting mixture and they were reacted at room temperature for 3 hours, 1 g of the reaction mixture was collected as a sampling material 1. Then, the inside temperature of the polymer solution was cooled to -25°C, to which 72 g of n-butyl acrylate was added dropwise over 8.5 hours. After completion of the dropwise addition, 1 g of the reaction mixture was collected as a sampling material 2. 12.0 g of methyl methacrylate was added to the reaction mixture. The resulting mixture was heated to 3°C and stirring was conducted for 8 hours. Polymerization was terminated by the addition of 1 g of methanol to the reaction mixture. The reaction mixture after termination of polymerization was poured into a large amount of methanol to cause precipitation and the precipitate thus obtained was used as a sampling material 3.

After the ¹H-NMR and GPC measurements of the sampling materials 1 to 3, Mn (number average molecular weight), Mw/Mn (molecular weight distribution), and the weight ratio of methyl methacrylate polymer (PMMA) block / n-butyl acrylate polymer (PnBA) block were determined. As a result, it has been revealed that the precipitate obtained in the end was a triblock copolymer (PMMA-b-PnBA-b-PMMA) of PMMA block-PnBA block-PMMA block; the PMMA block portion had Mn of 13,200, and Mw/Mn of 1.06; the entire triblock copolymer had Mn of 130,000 and Mw/Mn of 1.15; and a ratio of the polymer blocks was PMMA (12 wt%) - PnBA (76 wt%) - PMMA (12 wt%).

### Referential Example 2 (Synthesis of the block copolymer (b) shown in Table 1)

A 1-liter three-necked flask was equipped with a three-way stop cock, followed by deaeration inside. After purging with nitrogen, 291 g of toluene, 29 g of 1,2-dimethoxyethane, and 12.2 g of a toluene solution containing 9.7 mmol of isobutylbis(2,6-di-t-butyl-4-methylphenoxy)aluminum was added at room temperature, followed by further addition of 1.2 mmol of sec-butyl lithium. After 10.0 g of methyl methacrylate was added to the resulting mixture and they were reacted at room temperature for 3 hours, 1 g of the reaction mixture was collected as a sampling material 4. Then, the inside temperature of the polymer solution was cooled to -40°C, to which 65 g of n-butyl acrylate was added dropwise over 2.5 hours. After completion of the dropwise addition, 1 g of the reaction mixture was collected as a sampling material 5. 10.0 g of methyl methacrylate was added to the reaction mixture. The resulting mixture was heated to room temperature and stirring was conducted for 6.6 hours. Polymerization was terminated by the addition of 1 g of methanol to the reaction mixture. The reaction mixture after termination of polymerization was poured into a large amount of methanol to cause precipitation and the precipitate thus obtained was used as a sampling material 6.

After the ¹H-NMR and GPC measurements of the sampling materials 4 to 6, Mn (number average molecular weight), Mw/Mn (molecular weight distribution), and the weight ratio of methyl methacrylate polymer (PMMA) block / n-butyl acrylate polymer (PnBA) block were determined. As a result, it has been revealed that the precipitate obtained in the end was a triblock copolymer (PMMA-b-PnBA-b-PMMA) of PMMA block-PnBA block-PMMA block; the PMMA block portion had Mn of 8,800, and Mw/Mn of 1.13; the entire triblock copolymer had Mn of 72,000 and Mw/Mn of 1.17; and a ratio of the polymer blocks was PMMA (12 wt%) - PnBA (75 wt%) - PMMA (13 wt%).

### Referential Example 3 (Synthesis of the block copolymer to be used in Examples 4 and 5)

A 1-liter three-necked flask was equipped with a three-way stop cock, followed by deaeration inside. After purging with nitrogen, 278 g of toluene, 13.9 g of 1,2-dimethoxyethane, and 12.2 g of a toluene solution containing 8.18 mmol of isobutylbis(2,6-di-t-butyl-4-methylphenoxy)aluminum was added at room temperature, followed by further addition of 1.68 mmol of sec-butyl lithium. After 17.0 g of methyl methacrylate was added to the resulting mixture and they were reacted at room temperature for 1 hour, 1 g of the reaction mixture was collected as a sampling material 7. Then, the inside temperature of the polymer solution was cooled to -30°C, to which 102.0 g of n-butyl acrylate was added dropwise over 5 hours. After completion of the dropwise addition, 1 g of the reaction mixture was collected as a sampling material 8. 17.0 g of methyl methacrylate was added to the reaction mixture. The resulting mixture was heated to room temperature and stirring was conducted for 10 hours. Polymerization was terminated by the addition of 1 g of methanol to the reaction mixture. The reaction mixture after termination of polymerization was poured into a large amount of methanol to cause precipitation and the precipitate thus obtained was used as a sampling material 9.

After the ¹H-NMR and GPC measurements of the sampling materials 7 to 9, Mn (number average molecular weight), Mw/Mn (molecular weight distribution), and the weight ratio of methyl methacrylate polymer (PMMA) block / n-butyl acrylate polymer (PnBA) block were determined. As a result, it has been revealed that the precipitate obtained in the end was a triblock copolymer (PMMA-b-PnBA-b-PMMA) of PMMA block-PnBA block-PMMA block; the PMMA block portion had Mn of 10,600, and Mw/Mn of 1.07; the entire triblock copolymer had Mn of 103,000 and Mw/Mn of 1.04; and a ratio of the polymer blocks was PMMA (12.5 wt%) - PnBA (75.2 wt%) - PMMA (12.3 wt%).

### Referential Example 4 (Synthesis of the block copolymer to be used in Comparative Example 3)

In a similar manner to Referential Example 1 except that the amount of monomer to be supplied was changed, a triblock copolymer (PMMA-b-PnBA-b-PMMA) having a structure of PMMA block - PnBA block - PMMA block was prepared. It has been revealed that in the resulting triblock copolymer, the PMMA block portion had Mn of 12,500 and Mw/Mn of 1.09; the entire triblock copolymer had Mn of 83,000 and Mw/Mn of 1.12; and a ratio of the polymer blocks was PMMA (15.0 wt%) - PnBA (70.0 wt%) - PMMA (15.0 wt%).

### Referential Example 5 (Synthesis of the block copolymer to be used in Comparative Example 4)

In a similar manner to Referential Example 1 except that the amount of monomer to be supplied was changed, a triblock copolymer (PMMA-b-PnBA-b-PMMA) having a structure of PMMA block - PnBA block - PMMA block was prepared. It has been revealed that in the resulting triblock copolymer, the PMMA block portion had Mn of 30,500 and Mw/Mn of 1.13; the entire triblock copolymer had Mn of 102,000 and Mw/Mn of 1.18; and a ratio of the polymer blocks was PMMA (29.9 wt%) - PnBA (40.0 wt%) - PMMA (30.1 wt%).

### Reference Example 1

The block copolymer having a triblock structure of "polymethyl methacrylate" - "poly(n-butyl acrylate)" - "polymethyl methacrylate", which had been obtained in Referential Example 1, was used as the block copolymer (b), while a methacrylic resin having Mn of 92,000 and Mw/Mn of 1.6, and containing methyl methacrylate and methyl acrylate in an amount of 94 wt.% and 6 wt.%, respectively was used as the methacrylic resin (a). The block copolymer and the methacrylic resin were kneaded under melting condition at 230°C at a ratio as shown in Table 1 in a Laboplast mill. The resulting polymer composition was hot pressed at 230°C, whereby sheets of 1 mm thick and 2 mm thick were prepared. Test pieces were collected from these sheets and tensile strength, elongation at break, haze and hardness were measured. The results are shown in Table 2.

### Example 2

The block copolymer having a triblock structure of "polymethyl methacrylate" - "poly(n-butyl acrylate)" - "polymethyl methacrylate", obtained in Referential Example 2 was used as the block copolymer (b), while a methacrylic resin having Mn of 54,500 and Mw/Mn of 1.6, and containing methyl methacrylate and methyl acrylate in an amount of 86 wt% and 14 wt%, respectively, was used as the methacrylic resin (a). In a similar manner to Reference Example 1 except that the blending ratio was changed as shown in Table 1, sheets were prepared using the polymer composition. Test pieces were collected from the sheets and tensile strength, elongation at break, haze and hardness were measured. The results are shown in Table 2.

### Example 3

The block copolymer having a triblock structure of "polymethyl methacrylate" - "poly(n-butyl acrylate)" - "polymethyl methacrylate", obtained in Referential Example 2 was used as the block copolymer (b), while a methacrylic resin having Mn of 22,500 and Mw/Mn of 1.6, and containing methyl methacrylate and methyl acrylate in an amount of 86 wt% and 14 wt%, respectively, was used as the methacrylic resin (a). In a similar manner to Reference Example 1 except that the blending ratio was changed as shown in Table 1, sheets were prepared using the polymer composition. Test pieces were collected from the sheets and breaking strength, elongation at break, haze and hardness were measured. The results are shown in Table 2.

### Example 4

The block copolymer having a triblock structure of "polymethyl methacrylate" - "poly(n-butyl acrylate)" - "polymethyl methacrylate", obtained in Referential Example 3 was used as the block copolymer (b), while a mixture of a methacrylic resin having a high molecular weight (Mn: 94,000, Mw/Mn: 1.0), and another methacrylic resin having a low molecular weight (Mn: 10,000, Mw/Mn: 1.1) (each resin had a methyl methacrylate content (wt%) of 100%; a weight ratio of the mixture (high molecular weight resin/low molecular weight resin) was 70/30; and the content of the low-molecular weight methacrylic resin was 30 wt%) was used as the methacrylic resin (a). In a similar manner to Reference Example 1 except that the blending ratio of the methacrylic resin/block copolymer (weight ratio) was changed to 30/70, sheets made of the polymer composition were prepared, and test pieces were collected and evaluated. As a result, the sheets were found to have equivalent transparency (haze value) and flexibility (hardness) to those obtained in Example 3.

### Comparative Example 1

In a similar manner to Example 4 except that only the high molecular weight methacrylic resin (that having Mn of 94,000 employed in Example 4) was used as the methacrylic resin (a), sheets of the polymer composition were prepared and test pieces were collected and evaluated. As a result, the sheets were found to have equivalent transparency (haze value) and flexibility (hardness) to those obtained in Reference Example 1.

### Comparative Example 2

In a similar manner to Reference Example 1 except for the omission of a methacrylic resin as shown in Table 1, the sheets of the polymer composition were prepared. From the sheets, test pieces were collected and tensile strength, elongation at break, haze and hardness were measured. The results are shown in Table 2.

### Comparative Example 3

In a similar manner to Example 3 except that a mixing ratio (weight ratio) of the methacrylic resin and block copolymer was changed to 50/50 as shown in Table 1, sheets of the polymer composition were prepared. Test pieces were collected from the sheets and tensile strength, elongation at break, haze and hardness were measured. The results are shown in Table 2.

### Comparative Example 4

The block copolymer having a triblock structure of "polymethyl methacrylate" - "poly(n-butyl acrylate)" - "polymethyl methacrylate", obtained in Referential Example 4 was used as the block copolymer (b), while a methacrylic resin having Mn of 180,000 and Mw/Mn of 1.3, and containing methyl methacrylate and methyl acrylate in an amount of 95 wt% and 5 wt%, respectively, was used as the methacrylic resin (a). In a similar manner to Reference Example 1 except that the blending ratio (weight ratio) of the methacrylic resin/block copolymer was changed to 72/28, sheets made of the polymer composition were prepared and test pieces were collected and evaluated. It has been found from the results thus obtained that the sheets were a hard material having a hardness of 90 or more (JIS-A) and also had poor transparency with a haze value of 20% or more.

### Comparative Example 5

In a similar manner to Comparative Example 3 except that the block copolymer having a triblock structure of "polymethyl methacrylate" - "poly(n-butyl acrylate)" - "polymethyl methacrylate", obtained in Referential Example 5 was used as the block copolymer (b); and the blending ratio (weight ratio) of the methacrylic resin/block copolymer was changed to 30/70, the sheets of the polymer composition were prepared. As a result of evaluation on the test pieces collected from the sheets, the sheets were found to be a rigid material having a hardness of 90 or more (JIS-A).

**Table 1**

| | Block copolymer | | | Methacrylic resin | | Polymer composition | |
|---|---|---|---|---|---|---|---|
| | Number average molecular weight | Number average molecular weight of a polyalkyl methacrylate block (b2 max) having the largest molecular weight in the block copolymer (b) | Content of methyl methacrylate units (wt%) | Number average molecular weight | Content of low molecular weight (a2) (wt%) | Methacrylic resin (a) / block copolymer (b) weight ratio | Total of methacrylic resin (a) and polyalkyl methacrylate block (b) (wt%) |
| Ex. 1 (Ref.) | 130,000 | 13,200 | 24 | 92,000 | 1 | 30/70 | 46.8 |
| Ex. 2 | 72,000 | 8,900 | 25 | 54,500 | 10 | 30170 | 47.5 |
| Ex. 3 | 72,000 | 8,900 | 25 | 22,500 | 39 | 30170 | 47.5 |
| Comp. Ex. 2 | 72,000 | 8,900 | 25 | - | - | 0/100 | 25 |
| Comp. Ex. 3 | 72,000 | 8,900 | 25 | 22,500 | 39 | 50/50 | 62.5 |

**Table 2**

| | Performance of molded or formed product | | | |
|---|---|---|---|---|
| | Tensile strength (MPa) | Elongation at break (%) | Haze value (%) | Hardness (JIS-A) |
| Ref. Example 1 | 10.1 | 220 | 15.8 | 47 |
| Example 2 | 14.6 | 275 | 2.9 | 50 |
| Example 3 | 15.9 | 300 | 1.5 | 48 |
| Comp. Ex. 2 | 9.3 | 550 | 1.9 | 56 |
| Comp. Ex. 3 | 10.9 | 150 | 14.6 | 74 |

The above-described results suggest that when the polymer composition of Reference Example 1 satisfying the present invention was used, the molded or formed product obtained therefrom was excellent in both flexibility and mechanical strength; and when the block copolymer was used alone (Comp. Ex. 2), on the other hand, the molded or formed product had only insufficient mechanical strength.

Moreover, the test results of the composition obtained in Examples 2 and 3 suggest that when the polymer composition having, as a component constituting the methacrylic resin (a), at least 5 % of a low molecular weight component having a number average molecular weight not larger than 3 times that of the block (b2max) having the largest molecular weight in the methacrylate ester polymer blocks (b2) constituting the block copolymer (b), dispersibility of each component and transparency of the composition itself are heightened so that a molded or formed product featuring, in addition to excellent flexibility and mechanical strength, excellent transparency is available.

On the other hand, when the polymer composition is rich in the methacrylic resin as shown in Comparative Example 2, the molded or formed product has only poor flexibility and transparency, and moreover, has deteriorated mechanical strength.

As is apparent from Example 4, when a mixture of a high molecular weight component and a low molecular weight component is used as the methacrylic resin, a molded or formed product excellent in both flexibility and transparency and moreover excellent in mechanical strength is available similar to Example 2 or 3. When a methacrylic resin free of a low molecular weight component is used (Comparative Example 1), on the other hand, a molded or formed product thus obtained has insufficient transparency but excellent in flexibility and mechanical strength.

As described above, the acrylic polymer composition of the present invention is suited as a molding or forming material, because it has good flexibility, well-balanced with mechanical physical properties, and if desired, has improved transparency. The molded or formed product made of the acrylic polymer composition of the present invention is suitable for various purposes, because it has good flexibility and, if desired, has good transparency and moreover is well balanced in mechanical physical properties; and is expected to have excellent weather resistance, originating in the constituent of the polymer composition.

## Claims

1. An acrylic polymer composition comprising:
(i) (a) a methacrylic resin having at least 40 wt% of methacrylate ester units, and (b) a block copolymer having, in the molecule thereof, at least one structure in which (b2) polymer blocks each composed mainly of methacrylate ester units bonded to both ends of (b1) a polymer block composed mainly of acrylate ester units, and having a polymer block (b2) content of 10 to 50 wt%;
(ii) the weight ratio (a/b) of the methacrylic resin (a) to the block copolymer (b) falling within a range of 3/97 to 40/60; and
(iii) the total amount of the methacrylic resin (a) component and the polymer block (b2) component composed mainly of methacrylate ester units being 10 to 60 wt% based on the total amount of the resin components, wherein at least 5 wt% of the methacrylic resin (a) is a component having a number average molecular weight not larger than 3 times that of a block (b2max) having the largest molecular weight among the polymer blocks (b2) which are composed mainly of methacrylate ester units and constitute the block copolymer (b).

2. An acrylic polymer composition of Claim 1, wherein the methacrylic resin (a) has a number average molecular weight ranging from 5,000 to 2,000,000.

3. An acrylic polymer composition of Claim 1, wherein 8 to 60 wt% of the methacrylic resin (a) is a component having a number average molecular weight not larger than 3 times that of a block (b2max) having the largest molecular weight among the polymer blocks (b2) which are composed mainly of methacrylate ester units and constitute the block copolymer (b).

4. An acrylic polymer composition of anyone of claims 1 to 3, wherein the block copolymer (b) is a triblock copolymer.

5. An acrylic polymer composition of anyone of claims 1 to 4, wherein the block copolymer (b) has a number average molecular weight ranging from 10,000 to 1,000,000.

6. A molded or formed product made of an acrylic polymer composition as described in any one of Claims 1 to 5.

## Patentansprüche

1. Acrylpolymerzusammensetzung, umfassend:
(i) (a) ein Methacrylharz mit mindestens 40 Gew.-% an Methacrylatestereinheiten, und (b) ein Blockcopolymer mit mindestens einer Struktur in dem Molekül davon, worin (b2) Polymerblöcke, jeweils aufgebaut aus hauptsächlich Methacrylatestereinheiten, an beide Enden von (b1) einem Polymerblock, aufgebaut hauptsächlich aus Acrylatestereinheiten, gebunden sind, und mit einem Polymerblock-(b2)-Gehalt von 10 bis 50 Gew.-%;
(ii) wobei das Gewichtsverhältnis (a/b) des Methacrylharzes (a) zu dem Blockcopolymer (b) in einem Bereich von 3/97 bis 40/60 liegt, und
(iii) wobei die Gesamtmenge der Methacrylharzkomponente (a) und der Polymerblockkomponente (b2), hauptsächlich aufgebaut aus Methacrylatestereinheiten, 10 bis 60 Gew.-%, bezogen auf die Gesamtmenge der Harzkomponenten, beträgt,
wobei mindestens 5 Gew.-% des Methacrylharzes (a) eine Komponente mit einem zahlenmittleren Molekulargewicht von nicht größer als dem Dreifachen desjenigen eines Blockes (b2max) mit dem höchsten Molekulargewicht unter den Polymerblöcken (b2), welche hauptsächlich aus Methacrylatestereinheiten aufgebaut sind und das Blockcopolymer (b) konstituieren, ist.

2. Acrylpolymerzusammensetzung gemäß Anspruch 1, wobei das Methacrylharz (a) ein zahlenmittleres Molekulargewicht im Bereich von 5.000 bis 2.000.000 aufweist.

3. Acrylpolymerzusammensetzung gemäß Anspruch 1, wobei 8 bis 60 Gew.-% des Methacrylharzes (a) eine Komponente mit einem zahlenmittleren Molekulargewicht von nicht größer als dem Dreifachen desjenigen eines Blockes (b2max) mit dem höchsten Molekulargewicht unter den Polymerblöcken (b2), welche hauptsächlich aus Methacrylatestereinheiten aufgebaut sind und das Blockcopolymer (b) konstituieren, ist.

4. Acrylpolymerzusammensetzung gemäß einem der Ansprüche 1 bis 3, wobei das Blockcopolymer (b) ein Triblockcopolymer ist.

5. Acrylpolymerzusammensetzung gemäß einem der Ansprüche 1 bis 4, wobei das Blockcopolymer (b) ein zahlenmittleres Molekulargewicht in dem Bereich von 10.000 bis 1.000.000 aufweist.

6. Geformter Gegenstand oder Formgegenstand, hergestellt aus einer Acrylpolymerzusammensetzung, wie in einem der Ansprüche 1 bis 5 beschrieben.

## Revendications

1. Composition de polymère acrylique comprenant :
(i) (a) une résine méthacrylique ayant au moins 40 % en poids d'unités d'ester de méthacrylate, et (b) un copolymère séquencé ayant, dans sa molécule, au moins une structure dans laquelle (b2) des blocs de polymère composés chacun essentiellement d'unités d'ester de méthacrylate liées aux deux extrémités d'un (b1) bloc de polymère composé essentiellement d'unités d'ester d'acrylate, et ayant une teneur en bloc de polymère (b2) de 10 à 50 % en poids,
(ii) le rapport en poids (a/b) de la résine méthacrylique (a) sur le copolymère séquencé (b) tombant dans une gamme de 3/97 à 40/60 ; et
(iii) la quantité totale du composant de résine méthacrylique (a) et du composant de bloc de polymère (b2) composé essentiellement d'unités d'ester de méthacrylate étant de 10 à 60 % en poids, sur la base de la quantité totale des composants de résine, dans lesquels au moins 5 % en poids de la résine méthacrylique (a) représentent un composant ayant une masse moléculaire ne dépassant pas 3 fois celle d'un bloc (b2max) ayant la masse moléculaire la plus grande parmi les blocs de polymères (b2) qui sont composés essentiellement d'unités d'ester de méthacrylate et constituent le copolymère séquencé (b).

2. Composition de polymère acrylique selon la revendication 1, dans laquelle la résine méthacrylique (a) a une masse moléculaire moyenne en nombre comprise entre 5 000 et 2 000 000.

3. Composition de polymère acrylique selon la revendication 1, dans laquelle 8 à 60 % en poids de la résine méthacrylique (a) est un composant ayant une masse moléculaire moyenne en nombre ne dépassant pas 3 fois celle d'un bloc (b2max) ayant la masse moléculaire la plus grande parmi les blocs de polymère (b2) qui sont composés essentiellement d'unités d'ester de méthacrylate et constituent le copolymère séquencé (b).

4. Composition de polymère acrylique selon l'une quelconque des revendications 1 à 3, dans laquelle le copolymère séquencé (b) est un copolymère à trois blocs.

5. Composition de polymère acrylique selon l'une quelconque des revendications 1 à 4, dans laquelle le copolymère séquencé (b) a une masse moléculaire moyenne en nombre comprise entre 10 000 et 1 000 000.

6. Produit moulé ou formé réalisé en une composition de polymère acrylique comme décrite dans l'une quelconque des revendications 1 à 5.
